# EUROPEAN PATENT SPECIFICATION

(11) **EP 1 799 935 B1**
(45) Date of publication and mention of the grant of the patent: **22.02.2017**
(21) Application number: 05812737.4
(22) Date of filing: 17.10.2005
(51) Int. Cl.: E04F 15/02, C09J 7/02, B65H 37/00, A47G 27/04

(54) **SYSTEM AND METHOD FOR FLOOR CONVERING INSTALLATION**
SYSTEM UND VERFAHREN ZUR ANBRINGUNG EINES FUSSBODENBELAGS
SYSTEME ET PROCEDE PERMETTANT D'OBTENIR UNE INSTALLATION DE REVETEMENT DE SOL

(30) Priority: 15.10.2004 US 619340 P; 21.12.2004 US 18947; 15.06.2005 US 690762 P
(43) Date of publication of application: 27.06.2007
(60) Divisional application: 10180426.8
(73) Proprietor: INTERFACE, INC., Atlanta, Georgia 30339 (US)
(72) Inventor: SCOTT, Graham, A., H., LaGrange, GA 30240 (US); OAKEY, David, D., Lagrange, Ga Georgia 30240 (US); BRADFORD, John, P., LaGrange, GA 30240 (US); GRAY, Keith, N., Marietta, GA 30067 (US); COCHRAN, Craig, Atlanta, GA 30318 (US)
(74) Representative: Weston, Robert Dale
(86) International application number: PCT/US2005/037507
(87) International publication number: WO 2006/044928

(56) References cited:
- EP-A- 0 017 986
- EP-A- 0 942 111
- WO-A-2004/016848
- DE-A1- 2 649 644
- DE-U1- 20 111 113
- US-A- 5 217 552
- US-A- 5 401 547
- US-A1- 2003 071 051
- PATENT ABSTRACTS OF JAPAN vol. 1997, no. 12, 25 December 1997 (1997-12-25) & JP 09 209546 A (INAX CORP), 12 August 1997 (1997-08-12)
- PATENT ABSTRACTS OF JAPAN vol. 004, no. 128 (M-031), 9 September 1980 (1980-09-09) & JP 55 086714 A (DANTOO KK), 30 June 1980 (1980-06-30)

## Description

### Field of the Invention

This invention relates to floor coverings comprising modular carpet tiles, and methods for installing such floor coverings.

### Background of the Invention

Floor coverings have been in use since before recorded human history. The first such materials were undoubtedly animal skins or plant materials like leaves or stems. Later, floor coverings were manufactured, such as by weaving or knotting a variety of naturally occurring fibers, including sisal and wool. Beginning in the twentieth century, such fiber-faced floor coverings began to be manufactured from man-made fibers as well.

While the first floor coverings were limited in size to the size of an animal skin, later floor coverings expanded to cover entire room floors. Such "wall-to-wall" installations of "broadloom" floor covering came into wide-spread use in the twentieth century. Paradigm installations of such materials utilize one or a small number of pieces of broadloom carpeting to cover entire room floors. This type of wall-to-wall floor covering is generally attached to the floor in some manner.

Later, modular floor coverings utilized smaller, uniform size modules or tiles in both solid surface floor coverings such as vinyl tiles and in textile-faced floor coverings, usually called carpet tiles. Tiles may be installed as area rugs that do not cover the entire flooring surface. However, the vast majority of tiles are used in wall-to-wall installations. Tiles have traditionally been installed in aligned rows and columns, with the edges of each tile aligned with the edges of adjacent tiles ("conventional carpet tile installation method"). Conventional carpet tile has historically been a product that sought to mimic the appearance of broadloom carpet and to hide or at least de- emphasize the fact that the product was modular. Achieving this result has required, at minimum, that carpet tiles or modules be placed in a flooring installation with the same orientation that the modules had at the time they were produced (i.e., monolithically). However, textile face modular flooring designers have recently begun to design flooring and flooring installations that do not seek to mask, but rather celebrate, the modularity of the flooring. For instance, while still installed in aligned rows and columns, modules are installed "quarter- turned" with each tile position rotated 90° relative to each adjacent tile. Moreover, carpet tiles have been developed that can be installed "randomly" without regard to position or rotational orientation as described in U.S. Patent No. 6,908,656.

Modules are not always installed in aligned rows and columns, however. For example, tiles are also installed in aligned columns that do not form aligned rows of modules so that a column of tiles appears shifted up or down relative to adjacent tile columns ("ashlar installation method"). In other installations, tiles are installed in aligned rows that do not form aligned, but rather staggered, columns (" brick-laid installation method").

While the floor covering modules are generally of relatively substantial size and weight, which facilitates maintenance of the modules in the positions they are placed when the floor covering is assembled, it is desirable to provide a means for further resisting module movement. This has traditionally been accomplished by attaching the modules to the underlying flooring surface in a variety of ways.

Modules are often glued to the floor by first applying a layer of adhesive to the underlying flooring surface and then positioning the tiles on top of the adhesive. With this method, adhesive typically contacts the entire surface area of the underside of the flooring modules, which increases material costs and often leads to difficultly in re-positioning the tiles if they are positioned incorrectly. This is a particular problem during installation of patterned modules that must be matched at the seams. Moreover, when the tiles are eventually removed, glue remains on the flooring surface and that glue sometimes retains portions of the removed tiles. The glue (and any flooring materials held by the glue) must be removed from the floor to create a smooth surface before installing new tiles. This adds both cost and time to the installation process.

Modules may also be installed by pre-applying adhesive to the entire underside (or any part) of the module. For example, adhesive may be applied in a relatively narrow strip across each module underside and covered, prior to module installation, by a plastic film or paper strip that is peeled off just before module placement. Again, however, this method involves attaching the modules directly to the floor and can result in the consequent drawbacks discussed above.

Modules have also been installed using double-sided adhesive tape, whereby one side of the tape is positioned on the back of the module and the other side of the tape is positioned on the floor to thereby secure the module to the floor. Double-sided tape has also been positioned between and along the entirety of adjacent carpet and carpet tile edges. However, as with adhesive, double sided tape can be unforgiving with respect to tile re-positioning and can also leave a residue on the floor upon removal of the tiles. Moreover, the tape has a low tensile strength and is relatively inelastic and consequently is apt to stretch and not regain its shape. This can result in the gaps formed between adjacent tiles.

In addition to direct attachment to the floor, modules have also been indirectly attached to the underlying flooring surface, such as with mechanical fasteners or adhesive covered pads. For example, hook and loop fasteners have been used whereby a sheet of either the hook or the loop is secured to the floor and the other of the hook or the loop is provided on the back of the modules. The hook or loop on the modules then engages the hook or loop on the floor to secure the modules to the floor. Pads covered with adhesive have also been used. For example, a foam pad pre-coated on both sides with a releasable adhesive has been used. During installation, release paper is removed from both sides of the pad to expose the adhesive, and the pad is attached to the floor. Carpet tiles are then positioned on top of the pad and held in place by the adhesive. While these systems and methods may improve the installers' ability to re-position the tiles, they significantly increase the material cost of the installation. Moreover, with these installation methods, the tiles are more likely to move relative to each other and thereby create gaps in the installation.

Other installation methods exist whereby the tiles are neither directly nor indirectly attached to the floor. For example, one-sided adhesive tape, such as duct tape, has been used to secure adjacent tiles together. The tiles are positioned face down and the tape is secured along the entirety of the adjacent edges of the tiles. The tiles must then be carefully turned over to expose their wear surfaces without breaking the connection between adjacent tiles. This method requires a significant amount of time to position the tape on the tiles as well as a significant material investment to tape adjacent tile edges together along the entirety of the seams. Moreover, such adhesive tape is relatively flimsy, making it challenging to position the tape as desired on the underside of tiles, and, as with double-sided adhesive tape, suffers from low tensile strength and inelasticity, rendering it likely to permanently stretch when subjected to stress and thereby create permanent gaps between adjacent tiles.

While methods for installing floor coverings exist, a need exists for a system and method that reduces both the time and material costs needed to install modules into a stable floor covering

### Prior Art

WO2004/016848 (Interface, Inc) discloses connectors for linking module floor units in disclosed in are in the form of 'vinyl one sided adhesive tape, hook and loop type fasteners, magnets or magnetized material, adhesives, or other chemical bonding such as epoxy or any other suitable link (page 5, para. 2). There is no direct teaching of a connector comprising a film that resists stretching when subjected to tensile stresses.

US5217552 (Miyajima et al) relates to a pressure sensitive adhesive for installing a tile-like floor material such as carpet tile. Unlike the present invention, the tiles are adhered directly onto the flooring by either applying the adhesive directly to the floor or the adhesive is applied to the back of the tile (col. 4, lines 35 to 45). There is no teaching of connecting the module tiles together by connectors so that they "float" on the underlying floor surface. Thus the connector in is not suitable for installing modular tiles, each having an underside, on a floor surface without attaching the modular tiles to the floor surface.

JP09209546 (Inax Corp) relates to a tape comprising a synthetic resin sheet with pressure sensitive adhesive on both sides of the resin sheet and a central area devoid of the pressure sensitive adhesive layer. Unlike the present invention, this tape is not suitable for installing modular tiles on a floor surface without attaching the modular tiles to the floor surface. Having the adhesive on both sides of the resin sheet implies that the tiles are being attached directly to the floor surface.

JP55086714 (Dantoo KK) discloses tape containing adhesive applied to the backside of the tiles and does not teach modular tile connectors suitable for installing modular tiles on a floor surface without attaching the modular tiles to the floor surface.

DE2649644 (Acksteiner F) relates to an adhesive film for laying carpets, floor mats etc, the adhesive is located on both sides of the film so as to enable the carpet or floor mats to adhere to the floor surface.

US2003/071051 (Martinsen F) relates to a dispenser for presenting labels, stickers, stamps etc. that are releasably adhered to a backing strip. Unlike the present invention as defined in Claim 18, the labels or stickers are dispensed from the dispenser by manually pulling the backing strip from the dispenser causing the labels or stickers to be separated from the backing strip.

DE2011113U (Buettner-Frank GmbH) relates to a dispenser for dispensing labels etc and requires that the backing strip incorporating the labels to be pulled manually from the dispenser so as to separate the label from the backing strip. There is no teaching of an actuator to cause a connector to be released from the release material and presented through the opening to the user.

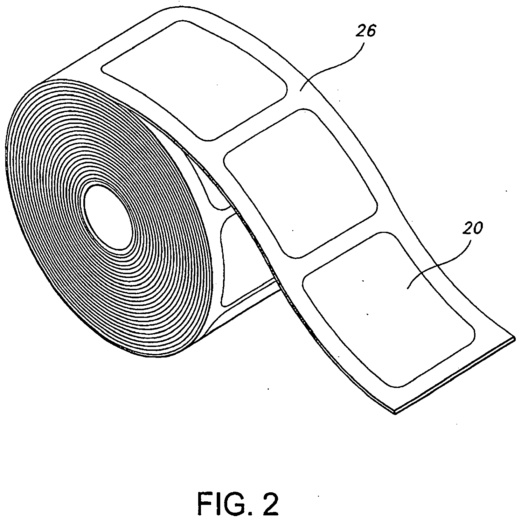

US5401547 (Minnesota Mining and Manuf.) relates to a stack of pre-cut sheets and a dispenser whereby the sheets include different adhesion levels to afford dispensing of the sheets. It is necessary for the individual sheet material to be flexible (see col. 3, lines 48 to 50), to afford sliding movement of the stack of sheets in the dispenser housing as the uppermost sheet is pulled from the dispenser and detaches from an adjacent lower sheet (see Fig. 2). Without the necessary flexibility the individual sheets in the stack will be unable to be dispensed from the dispenser as this prevents the required sliding movement of the stack of sheets in the dispenser.

EP0017986 (Wacker Chemie) does not teach adhesive sheets it teaches 'self-adhesive carpets'. This clearly implies that the carpets are directly adhered onto the floor surface and therefore not suitable for installing modular tiles on a floor surface without attaching the modular tiles to the floor surface.

EP0942111 (Bridgestone/Firestone) relates to an adhesive rubber article such as splice tape or a rubber member which has been factory laminated on at least one side to a tape adhesive. The tacky surface of the adhesive rubber article is attached directly onto the substrate surface being covered or connected (col. 5, lines 10 to 15). As the adhesive rubber article is primarily destined for the roofing industry, the substrate being the roof surface of a building. Since the adhesive rubber article is placed over the substrate, it is not suitable for installing modular tiles without needing to attach the tiles to the floor surface.

### Summary of the Invention

Floor coverings comprising modular tiles and methods for installing floorcoverings according to the present invention are set forth in the appended claims.

This invention addresses the problems of previous modular flooring installation methods by providing systems and methods that reduce the time and material costs required to install a floor covering. Connectors are used to join adjacent floor covering units. The connectors are particularly useful in installing modular floor covering units ("tiles"). Each connector includes a film and an adhesive layer coated on one side of the film. To install tiles using the connectors, a first tile is placed on the floor at a position determined by conventional tile installation methods. A connector is positioned so that the adhesive layer faces upward and does not contact the floor. The connector is typically positioned so that only a portion of the adhesive layer adheres to the underside of the tile, leaving the remainder of the connector extending from the underside of the tile. Tiles are then positioned adjacent the first tile so that a portion of the connector adheres to the adjacent tiles. In this way, the connectors span the adjacent edges of the adjacent tiles. The tiles are assembled on a underlying floor surface without the need to attach them to the floor surface. Rather, the tiles are linked to each other with the connectors, so that the tiles create a floor covering that "floats" on the underlying floor surface.

The connectors need not be positioned along the entirety of the adjacent edges nor even across all adjacent tiles edges in the installation. Rather, the connectors are sized so that, when positioned in the installation, they do not extend along the entire length of the adjacent edges. Moreover, while any number of connectors may be used at any number of locations between adjacent tiles, the benefits of this invention may be fully realized by placing the connectors in strategic locations within the assembly (such as at some of the corners where four tiles meet). This is in contrast to prior installation methods that required stabilizing material be placed along the entirety of adjacent tiles edges so that all adjacent tiles edges in the installation were stabilized.

The size and relatively minimal number of connectors needed to stabilize a tile installation can result in a significant reduction in material costs from prior tile installation methods. Moreover, use of the connectors significantly reduces tile installation time by obviating the need to prep a floor prior to installation. Instead of the installer applying a layer of adhesive to the floor and then retracing his steps to position the tiles on the adhesive layer, with the connectors, the installer positions and secures as he goes. Moreover, given the releasable adhesive used on the connectors and the limited surface area of the tiles that contacts the connectors, the tiles can easily be re-positioned if necessary. Furthermore, because the tiles do not interact with the underlying floor, they are easily removable from the floor and leave the underlying with little or no residual adhesive upon such removal. Consequently, the floor does not require refinishing before it is recovered with another floor covering.

Installation can be expedited through use of a dispenser that holds connectors and that preferably also produces individual connectors in a ready-to-grasp fashion. The dispenser may have a mechanism for separating the connectors from a release layer or from other connectors. The dispenser may be secured to an installer's belt and leg and may include connectors in a roll, connectors on a roll of release material, connectors on fan-folded release material, or individual connectors, as examples. The dispenser may be refillable or designed for single use.

A stack of connectors each having adhesive on one side may be bonded or otherwise attached together. The individual connectors in the stack of connectors may be bonded or attached together in a variety of ways. For example, the adhesive on the adhesive side of one connector may be releasably attached to an adjacent connector's opposite side that may be coated with a release coating to prevent the adhesive from forming a permanent or hard-to-detach bond. Generally, the adjacent connectors in a stack are oriented in a similar direction and aligned. As another example, a release layer may separate the adjacent connectors, with the adhesive layer of a first connector attached to a release material and the opposite side of a second connector also attached to the release material. As yet another example, the stack of connectors may be successive connectors attached on a single strip of release material folded such that adjacent connectors on the strip overlap one another in the stack, i.e. fan folded release material. A stack of connectors may also be included within a dispenser that assists a user in removing an individual connector from the stack of connectors.

During carpet installation, a carpet installer may use a stack of connectors by removing an individual connector from the stack and attaching it to the underside of the carpet edge.

The connectors may have a layer of water-based or synthetic polymer-based adhesive on one side. The adhesive may have low or no volatile organic content and may be plasticizer resistant.

The connector may have alignment indicia for facilitating installation of carpet tiles. Such indicia include markings, colors, and objects such as crosshairs, lines, dots, blocks, and multi-color segments and quadrants.

The invention provides a method of installing carpet tile using connectors with adhesive on one side. An installer places a carpet tile in or near its desired installation position on a floor surface with the underside of the tile resting on the floor surface. The installer uses one hand to lift an edge, corner, or other portion of the tile and the other hand to attach a connector adhesive side up to the edge or other part of the underside of the portion of the tile such that an exposed portion of the connector extends beyond the edge of the tile. The installer then places a second tile adjacent the first and attaches the underside of the second tile to the exposed portion of the connector. A dispenser may provide the connector to the installer with the adhesive side up and in a location convenient to the portion of the carpet tile to which the connector is to be attached.

### Brief Description of the Drawings

FIG. 1 is perspective view of one embodiment of a connector and release layer of this invention.
FIG. 2 is a perspective view of another embodiment of connectors and a release layer of this invention.
FIG. 3 is a top plan view of yet another embodiment of connectors of this invention.
FIG. 4 is a schematic view of one embodiment of a connector dispenser of this invention.
FIG. 5 is a bottom plan view of an installation of tiles pursuant to this invention.
FIG. 6 is a bottom plan view of a subset of the tiles of FIG. 5.
FIG. 7 is a bottom plan view of another installation of tiles pursuant to this invention.
FIG. 8 is a bottom plan view of a subset of the tiles of FIG. 7.

### Detailed Description of the Drawings

One of skill in the art will understand that the methods described herein may be used in a variety of floor covering installations. However, applicants have found the connectors described herein particularly useful in any type installation (including wall-to-wall and area rug installations) of modular carpet tiles (hereinafter referred to as "tiles"). The tiles may be of various colors and textures in a range of sizes and shapes. For example, individual tiles may be in a shape that simulates wood planking or shapes of ceramic and other tiles, including, but not limited to, hexagons, squares, rectangles, triangles and other shapes. In addition, the tiles may be provided in a variety of textures. The tiles are preferably installed on a generally smooth surface, including, but not limited to plywood, laminates, linoleum, vinyl tile, hardwoods, and concrete. However, as discussed below, the tiles may be installed on an intermediate substrate, including pad and broad loom carpet, located between the tiles and the underlying floor.

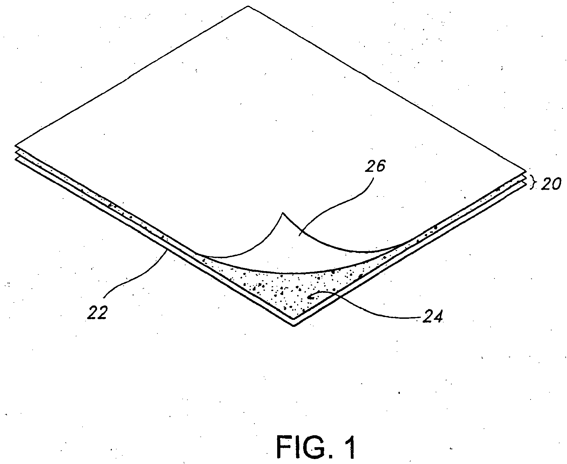

FIG. 1 illustrates one embodiment of a connector 20 of this invention. The connector 20 includes a film 22 and an adhesive layer 24 coated on one side of the film 22. A release layer 26 is placed on top of the adhesive layer 24 to protect the underlying adhesive. In use, the release layer 26 is removed from the connector 20 to expose the adhesive layer 24. As will be described in more detail below, the connector 20 is then positioned so that the adhesive layer 24 contacts the underside of adjacent tiles to span the adjacent edges of the tiles and thereby connect the tiles together to form a floor covering. In this way, the tiles are assembled on a underlying flooring surface without the need to attach them to the floor surface, so that the tiles create a floor covering that "floats" on the underlying floor surface.

The film 22 may be of any suitable material, but, to facilitate rapid flooring installations in accordance with this invention, is preferably made of a material that is relatively stiff so that a connector positioned partly in contact with the underside of a tile will project beyond the edge of the tile in roughly the same plane as the underside of the tile. This facilitates proper positioning of the projecting connector portion to make appropriate contact with an adjacent tile. This is typically greater stiffness than most adhesive tapes that will significantly curl or droop down from an underside of a tile to which a portion (but not all) of a length of such adhesive tape is attached. At the same time, the film 22 from which connectors of this invention are made should be sufficiently flexible to facilitate handling the connectors in a roll if desired and to permit the connectors to conform to floor or tile irregularities.

The film 22 should also resist shrinkage, which can result in buckling of adjacent tiles, and exhibit a relatively high tensile strength to resist stretching under foot traffic and rolling loads. Materials that exhibit a tensile strength between 160-270 mega Pascals ("MPa") in the machine direction and 165-210 MPa in the cross-machine direction are used in this application. Moreover, the percentage by which the material may be elongated or stretched before breaking should also be relatively high to prevent connector breakage and failure when subjected to tensile stresses. Material used must be capable of being stretched 120-200% of its machine direction dimension and 150-170% of its cross-machine direction dimension before breaking.

Polymeric materials, paperboard and other materials including textiles and metals that are suitably stiff, thin, strong, water-resistant and inexpensive may also be used for film 22. However, the film 22 is preferably a synthetic polymer material, such as a polyolefin, a polyamide, or a polyester, and more preferably polyethylene terephthalate ("PET") polyester. These materials are relatively cheap, will conform to the underlying floor in use, and will resist corrosion. While not necessary, it is preferable that the film material be recyclable.

The film 22 preferably has a thickness between .0005 and .015 inches, inclusive, and more preferably between .003 and .01 inches, inclusive, and even more preferably is .005 inches.

The film 22 may also have, but does not have to have, a primer coat (not shown in the figures), such as a coating of acrylic, applied to the same side on which the adhesive layer 24 is to be applied to promote adhesion between the film 22 and the adhesive layer 24. The film 22 may be corona treated on one or both sides to increase surface tension and promote adhesion between the film 22 and the adhesive 24 without the use of adhesion promoting coatings.

The film 22 may be any shape, including, but not limited to, a circular shape or any rectilinear shape such as a square or triangular. A square shape is suitable for most installations. Moreover, the size of the film 22 can depend on the size of the tiles being installed. However, as a general rule, the surface area of the film 22 can be as little as 1%, and preferably between 2- 5%, of the surface area of the tiles for which the connectors are intended to be installed. It has been found that a connector surface area over nine square inches does not meaningfully contribute to the stability of an installation of 18 inch square or 50 centimeter square tiles. Thus, connectors 20 desirably should be, but do not have to be, no larger than about three inches by three inches square to conserve materials and limit expense.

While the adhesive layer 24 can be any adhesive that exhibits certain attributes desirable for use in this invention, the specific type or amount of adhesive used in the connector may often depend on the tile with which the connector 20 is intended for use. Some carpet tiles have backings containing plasticizer to increase flexibility and/or change other characteristics of the backing. Plasticizer has a tendency to migrate and may migrate into certain connector adhesives. This migration may weaken the adhesive properties of the connectors making them less effective. Water-based adhesives (rather than solvent based adhesives) with little or no volatile organic content ("VOC") may be plasticizer resistant and are thus generally preferable in cases where plasticizer migration resistance is desirable (i.e., in installations of carpet tiles containing plasticizer). Acrylic adhesives, including those sold by 3M under the identification numbers 9465, 6032, 6035, and 6038, and in particular 9465 (which is primarily an acrylate terpolymer) and 6032 (a tackified acrylate copolymer), are suitable. Moreover, the adhesive 24 preferably, but not necessarily, is resistant to water and typical carpet cleaning detergents. It is also preferable to use a releasable adhesive.

The adhesive layer 24 in all connectors 20 should adhere well to the back of the tiles.

However, the adhesion to the tile should not be so strong as to prevent removal and repositioning of the tile relative to the connector 20, if necessary. If the bond strength between the tile and the adhesive (i.e., the amount of force required to separate the adhesive layer 24 from the tile backing, which can be measured using the ASTM D-3330 test (commonly referred to as the "90 degree peel test")) is too strong, the adhesive layer 24 will peel from the film and remain with the tile, thereby destroying the connector. Thus, the bond strength between the adhesive layer 24 and the tile should not be stronger than that between the adhesive layer 24 and the film 24.

The bond strength is preferably between 5-100 ounces/inch, inclusive, at room temperature. The preferable bond strength may depend on the tile backing. For example, the bond strength between the adhesive and hardback tiles, such as, for example, those made from PVC, polyurethane, or polyolefin, is preferably about 50-70 ounces/inch. The bond strength between the adhesive and tiles having a textile backing, such as for example a woven polypropylene or felt backing, is preferably about 10-60 ounces/inch. Moreover, the bond strength between the adhesive and cushion back tiles is preferably about 40-60 ounces/inch, and the bond strength between the adhesive and bitumen backed tiles is preferably about 10-20 ounces/inch. It is preferable that the bond strength between a tile and the adhesive at elevated temperatures remain within +/- 15% of the bond strength at room temperature.

The amount of adhesive (i.e., the thickness of the adhesive layer) provided on each connector 20 can depend both on the size of the connector 20 as well as the tile to be used with the connector 20. However, it is preferable that, while the amount of adhesive should enable the connector sufficiently to contact and engage the underside of the tile to achieve the bonding strengths set forth above, it should not be so much that the adhesive migrates beyond the interface of the connector 20 and tile to contact the underlying floor. In this way, the floorcovering installation will remain unsecured to the underlying floor to facilitate the eventual removal of the modular units. A connector 20 with an adhesive thickness about .0005-.010 inches, and more preferably about .002-.008 inches, has been found suitable for most applications.

For tiles having a woven or knitted textile backing, more adhesive will typically be necessary to penetrate the cavities formed in the backing and thereby provide sufficient interfacial contact between the tile and adhesive. Connectors having an adhesive layer 24 that is about .005-.008 inches thick is preferable for tiles having textile backings. For tiles having a relatively flat or shallow embossed backing surface, such as hard back tiles, less adhesive, preferably with a thickness in the range of .002-.003 inches, may be used.

All of the adhesives contemplated for use on the connectors should also have sufficient sheer strength to prevent the tiles from moving relative to the connectors or each other and thereby creating gaps between adjacent tiles after installation.

Although not shown in the figures, it is possible to provide a logo or other design elements on the connectors 20. For example, a logo may be inked on the side of the film on which the adhesive is to be applied. In this way, the ink, which typically has a high VOC content, is trapped between the film and the adhesive, preventing any undesirable emissions from the ink. Moreover, when the connector is positioned on the release paper, the logo is also protected by the film. This prevents the logo from being accidentally scratched off or otherwise removed from the connector.

It may be useful to print or otherwise provide on the connectors alignment indicia (not shown in the figures) for facilitating installation of the tiles. The installer then need only align the tile edges (or other portions of the tiles) with the indicia to ensure that the connectors are optimally placed between adjacent tiles. Any indicia that would convey to the installer where the tiles should be placed on the connectors can be used. For example, connectors can be provided with crosshairs, divisional lines parallel and transverse to the edges of the connectors, dots, blocks, etc. Moreover, different portions of the connectors can be colored (such as by dividing the connectors into quadrants and imparting a different color to each quadrant) to indicate proper carpet tile positioning.

The release layer 26 may be any material compatible with the adhesive such that the release layer 26 does not adhere to the adhesive to prevent its removal from the connector. Kraft paper having a low energy coating, such as a polymer coating (e.g., polymeric silicone), on at least one side has been found to be particularly suitable in this application. However, release materials suitable for use in this invention are widely commercially available, such as from 3M, and readily known to one of ordinary skill in the art.

The connectors 20 are preferably provided to the installation site as individual units already entirely or partially cut into the desired shape and size to be used in the installation. While each connector 20 may be manufactured separately, economies of manufacture may be achieved by first manufacturing a sandwich of film 22, adhesive layer 24, release layer 26 larger than the intended connector size, and then cutting the connectors 20 from that sandwich. The adhesive layer 24 can be coated onto the desired film 22, after which the release layer 26 is positioned in contact with the adhesive layer 24 to form the sandwich. In another manufacturing embodiment, the adhesive layer 24 is first applied to the release layer 26, after which the film 22 is positioned onto the release layer 26 to form the sandwich.

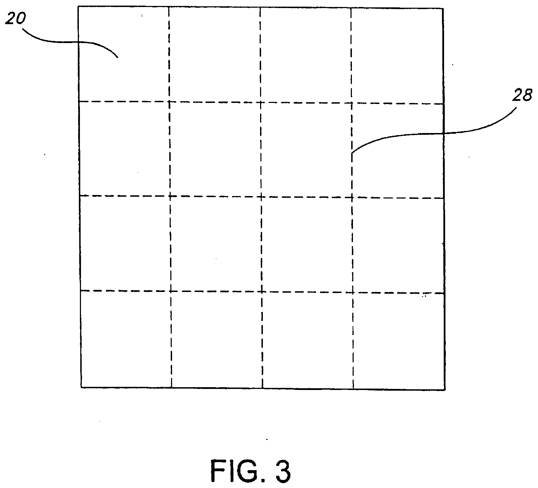

The resulting sandwich may obviously then be cut into connectors 20 of the desired shape and size. However, a number of connectors 20 is preferably provided on a single release layer 26. For example, multiple pre-cut or perforated connectors 20 may be positioned consecutively along a strip of release layer 26. For ease of handling and storage, this strip can be rolled so that the connectors are positioned on the outside (see FIG. 2) or inside of the roll or folded between consecutive connectors 20 into an accordion shape. Moreover, a number of connectors 20 may be provided on a sheet of release layer 26. The film 22 may be provided with perforations 28 (see FIG. 3) or may be fully cut into the desired connector shape and size for ease of removal from the release layer 26 (not shown) during installation. The ideal number of connectors 20 provided on a strip or sheet of release material will obviously vary depending on the size of the installation.

Provision of the connectors 20 on a strip or sheet of release material has been found to facilitate removal of the connectors 20 from the release layer 26 and thus reduce installation time. With respect to connectors 20 provided on a strip of release material (as shown in FIG. 2), installation can also be expedited through use of a connector dispenser that holds at least one rolled or accordion folded strip of connectors 20 and that preferably also provides a mechanism for separating the connectors 20 from the release layer 26. The dispenser, which, for example, may be fashioned as a backpack or mounted on the installer's belt, preferably includes structure for supporting at least one roll of connectors 20 (and preferably more).

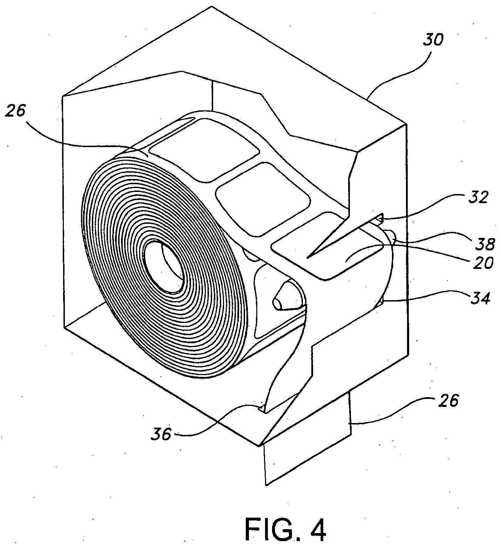

In one embodiment of such a dispenser (see FIG. 4), a roll of release material bearing connectors 20 is housed in a box 30 made from any sufficiently-rigid material, such as, for example, plastic, metal, or cardboard. The box preferably includes three openings 32, 34, 36 through which the strip of release material is fed. The strip of release material is fed through the first opening 32, at which opening is positioned a projection 38. The release material is then fed back into the box 30 through a second opening 34 and out a third opening 36. In use, the installer pulls on the release material strip extending from the third opening 36. This, in turn, advances from the roll portions of the release layer 26 bearing connectors 20. As the release layer 26 extends over the projection 38, the connector 20, which is relatively rigid, is unable to conform to the shape of and travel over the projection 38. Instead, the connector's leading edge disengages from the release layer 26, after which the installer can easily grip the disengaged edge to remove the connector 20 fully from the release layer 26. Obviously, the more connectors the dispenser is able to support, the fewer times the installer must reload the dispenser during installation. This can be especially beneficial during large installations.

Several alternative dispenser designs are possible. For instance, the dispenser may be altered for a variety of locations. In addition to being secured to a user's belt and leg, a dispenser may be strapped between the user's knees, mounted to the user's arm or wrist, warn as a backpack, strapped across a user's shoulders, or attached to, secured to, hung off, or touching any suitable part of the user's anatomy. Typically, the location of the dispenser will provide the user convenient access to the connectors being dispensed.

Alternatively, the dispenser may be used separately from the user's anatomy. For example, the dispenser may rest on the floor or may be attached to a kneeler upon which the user kneels. The dispenser may hang from the ceiling or walls or may be attached to a zip line. The dispenser may also be part of or include some or all of the packaging in which the dispenser is shipped. As other alternative, the dispenser may dispense more than one connector at a time or may dispense a grid of connected dispensers.

As another example, connectors may be stacked within a dispenser individually, such that each connector has release material covering all or a portion of its adhesive side, so that it will not stick to the other connectors in the stack. The release material may have a weak adhesive on it so that the adjacent connectors in the stack are held together in a stack (i.e. the weak adhesive removeably sticks to the non-adhesive side of adjacent tiles).

As yet another alternative, the connectors may be stacked within the dispenser so that the adhesive side of each connector attaches to the adjacent connector. For example, a siliconated or polyflorinated release coating such as an acrylic, polyolefin, polyamide, or polyester may be applied to the non-adhesive side of each tile so that the adhesive sides of adjacent tiles may be removeably attached to those non-adhesive sides.

Stacks of connectors may be used with or without a dispenser. In some cases, it may be convenient for an installer to simply hold a stack of connectors removing one connector at a time for use. The connectors in the stack may be attached in a variety of ways such as those described above.

In another embodiment of this invention, the release material 26 may be omitted entirely. Rather, the connectors 20 can be stacked on top of each other, with the adhesive layer 24 of one connector 20 contacting the film 22 of the connector 20 positioned above it in the stack. The installer then simply peels a connector 20 from the stack during installation.

In one method of installing tiles using the connectors, a first tile is placed on the floor at a position determined by conventional tile installation methods. A connector 20 is peeled from the release layer 26 (or from a stack of connectors 20) and positioned so that the adhesive layer 24 faces upward away from the underlying floor. The connector 20 is positioned so that only a portion of the adhesive layer 24 adheres to the underside of the tile, leaving the remainder of the connector 20 extending from the underside of the tile. A tile or tiles are then positioned adjacent the first tile so that a portion of the connector 20 adheres to the adjacent tile(s). In this way, the connector spans the adjacent edge(s) of the adjacent tile(s).

Any number of connectors 20 may be used to connect adjacent tiles in an installation. However, to create a stable floor covering, the connectors need not be positioned along the entirety of the adjacent tile edges nor even across all adjacent tile edges. Rather, unlike adhesive tape that has been used to secure adjacent tiles together along the entirety of adjacent tile edges, the connectors 20 of this invention need only extend along a very limited length of the adjacent edges. For example, the tiles of a floor covering installation where only 5%-10% of adjacent tile edges are stabilized with connectors 20 have been found to exhibit planar stability (measured by the cupping and/or curling of the tiles) and dimensional stability (measured by the skewing of the tiles), as well as the ability to retain their relative positions in the installation when subjected to foot traffic, rolling traffic, and stresses applied during cleaning and maintenance.

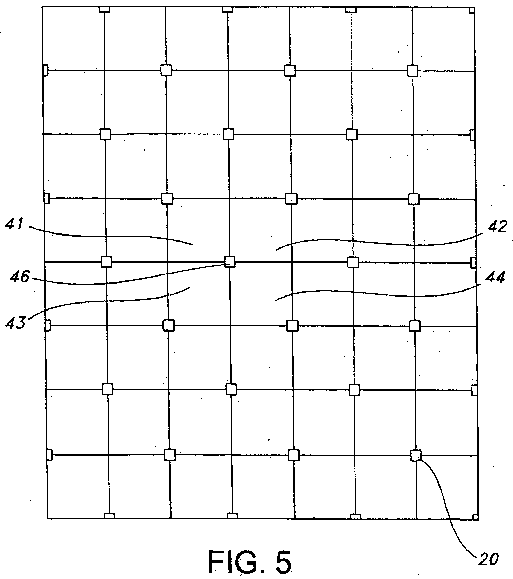

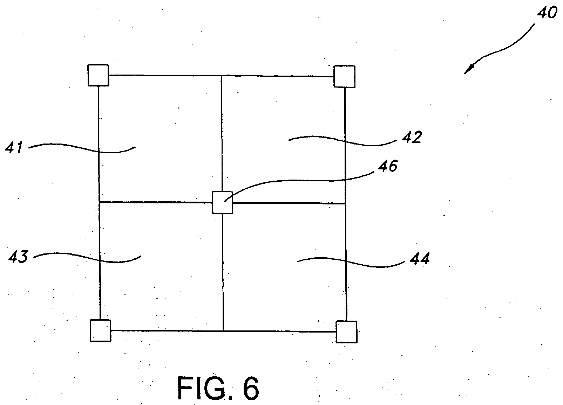

FIG. 5 shows one embodiment of a conventional installation (i.e., in aligned columns and rows) of tiles. For ease of discussion, the positioning of the connectors is discussed relative to a basic unit 40 of four tiles 41-44, as shown and arranged in FIG. 6. Tiles 41-44 are preferably connected with a central connector 46 at the corners where they intersect. Moreover, the corner of each tile diagonal from the center connector 46 is also connected to adjacent tiles with a connector 20. In this way, only a total of two tile connectors (the center connector 46 plus a quarter of a connector at each of the four diagonal tile corners) need be used to install the basic unit 40 of four tiles 41-44. Breaking this down even further, each of the four tiles 41-44, draws its stability from, on average, only one half of the surface area of a connector.

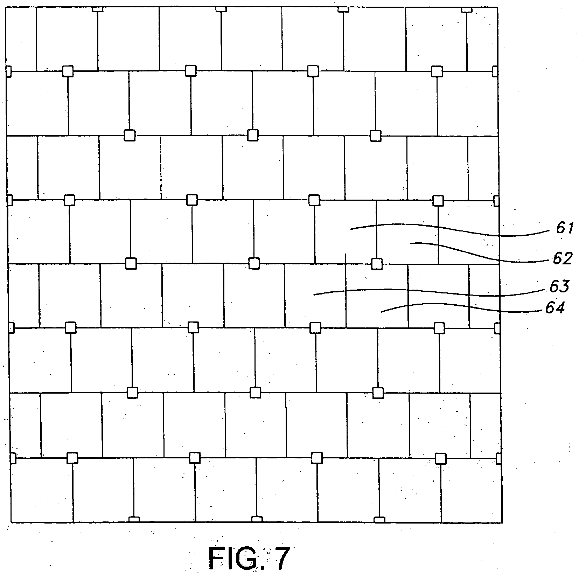

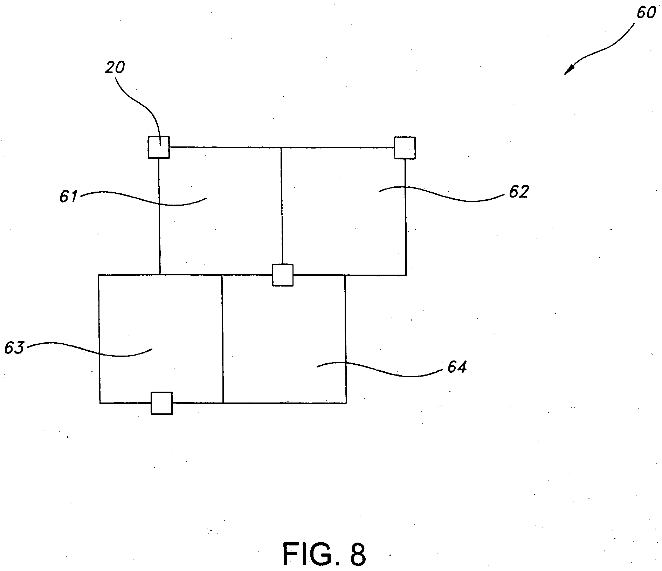

FIG. 7 illustrates possible connector placement in a brick-laid tile installation (or ashlar installation if FIG. 7 is rotated ninety degrees). For ease of discussion, the preferable positioning of the connectors 20 is discussed relative to a basic unit 60 of four tiles 61-64, as shown and arranged in FIG. 8. As with tiles 41-44, a total of only two tile connectors (1/2 of a connector per each tile) need be used to install the basic unit 60 of four tiles 61-64.

FIGS. 5-8 illustrate a few of only countless connector placement possibilities for installing tiles. Connectors 20 may be positioned at any location between adjacent tiles, and thus any given tile in the installation may contact a portion of as few as one connector and as many as feasible given the size of the tile and of the connectors 20. In addition to placement at the corners of intersecting tiles, connectors 20 may be positioned to span the adjacent edges of only two tiles. Moreover, different shaped or sized connectors 20 may be useful in a single installation. For example, in addition to the rectangular connectors shown in FIG. 5, triangular- shaped connectors may be useful at the border of an installation, such as where the tiles abut a wall.

Because the tiles are not attached to the floor, they need not be placed directly on an underlying flooring surface. Rather, the connectors 20 of this invention work equally well with tiles positioned on an intermediate substrate positioned between the tiles and the floor. For example, a barrier material, such as a plastic sheet, may be positioned on the floor prior to tile installation. The plastic sheet can serve to protect the floor from damage, such as might be caused by liquids spilled on the tiles that escape through the tile seams, as well as serve as a barrier to moisture present in the existing floor and thereby eliminate the need for sealants and • barrier coatings. Moreover, a cushion or foam pad may also be positioned on the floor before tile installation. The cushion provides comfort underfoot and also eliminates the need to use cushion back carpet tiles. Rather, hardback tiles can simply be installed on an underlying cushion pad.

The connectors of this invention improve upon current tile installation systems and methods. The connectors use both less material and cheaper materials than traditional installation systems. Moreover, use of the connectors significantly reduces tile installation time (by as much as 60% of the time for adhesive systems) by obviating the need to prep a floor prior to installation. Rather than applying a layer of adhesive to the floor and then retracing his steps to position the tiles on the adhesive layer, with the connectors, the installer positions and secures as he goes. Moreover, given the releasable adhesive used on the connectors and the limited surface area of the tiles that contacts the connectors, the tiles can easily be re-positioned if necessary. Furthermore, because the tiles do not interact with the underlying floor, they are easily removable from the floor and leave the underlying floor pristine upon such removal. Consequently, the floor does not require refinishing before it is recovered with another floor covering.

The embodiment described above is illustrative and non-limiting. Many variations of the structures illustrated in the drawings and the materials described above are possible and within the scope of this invention as defined in the claims.

## Claims

1. A floor covering comprising modular carpet tiles (41-44, 61-64) each having an underside on a floor surface without being attached to the floor surface, the tiles being connected together by modular carpet tile connectors (20), each comprising;
a) a film;
b) a layer of adhesive (24) located on a side of the film;
wherein:
i) said connectors extend along only a portion of adjacent tile edges;
ii) said connectors capable, in use, of forming a bond when contacting the undersides of adjacent tiles, the adhesive having sufficient shear strength so as to prevent relative movement between the adjacent installed tiles, and
iii) said film (22) is made of a material that is capable of being stretched 120-200% of its machine direction dimension and 150-170% of its cross-machine direction dimension before breaking and has a tensile strength between 160 and 270 MPa in the machine direction and between 165 and 210 MPa in the cross machine direction..

2. The floor covering of claim 1, wherein said underside of a carpet tile has a backing comprising a hardbacking made from PVC or a textile backing comprising woven polypropylene or a bitumen backing, and wherein said connector is capable, in use, of forming a bond when contacting the undersides of adjacent tiles, such that in use when bonded to the undersides of adjacent tiles said bond between the adhesive layer (24) and the tile has a bond strength measured using the ASTM D-3330 test of between 0.560 kg/cm - 0.782 kg/cm (50-70 ounces/inch) when bonded to the backing made from PVC, or a bond strength between 0.11kg/cm - 0.67kg/cm (10-60 ounces/inch) when bonded to a tile having the textile backing comprising woven polypropylene or a bond strength between 0.11kg/cm - 0.22kg/cm (10-20 ounces/inch) when bonded to a tile having the bitumen backing so as to permit removal and repositioning of the tile relative to the connector.

3. The floor covering as defined in claim 1 or 2, wherein the connector (20) further comprises a primer coat between the film (22) and the adhesive layer (24).

4. The floor covering of claim 3, wherein the primer coat comprises acrylic.

5. The floor covering of any of the preceding claims, wherein the film (22) is corona treated.

6. The floor covering as claimed in any of the preceding claims, wherein the connector (20) is capable of re-bonding with an underside of a tile (41-44, 61-64) after the bond between the layer of adhesive (24) and the underside of the tile (41-44, 61-64) has been broken.

7. The floor covering as claimed in any of the preceding claims, wherein the film (22) has a thickness between 0.00127cm (0.0005 inches) and 0.0381cm (0.015 inches).

8. The floor covering as claimed in any of the preceding claims, wherein the film (22) is a synthetic polymer material.

9. The floor covering as claimed in claim 8, wherein the synthetic polymer material is selected from any one of a polyolefin or a polyamide, or a polyester or a polyethylene terephthalate ("PET") polyester.

10. The floor covering of any of the preceding claims, wherein each connector (20) spans at least three adjacent tiles (41-44, 61-64).

11. A floor covering as claimed in claim 10, wherein each connector spans abutting corners of adjacent tiles (41-44, 61-64).

12. A floor covering as claimed in Claim 10 or 11, wherein the tiles are placed in a brick-laid tile installation.

13. The floor covering of any of the claims 10 to 12, wherein each tile (41-44, 61-64) comprises a surface area and each connector (20) comprises a surface area, wherein the surface area of a connector is 1 - 5% of the surface area of a tile.

14. The floor covering of any of the preceding claims , wherein the adjacent edges formed by adjacent tiles (41-44, 61-64) in the floorcovering installation comprise a total length and wherein the connectors (20) in the floorcovering installation span between approximately 5-10% of the total length of the adjacent edges.

15. A method for installing a floor covering as defined in any of the claims 1 to 13 comprising the steps of:-
i) providing a modular floor tile connector (20) comprising a film and a layer of adhesive located on one side of the film in which said film (22) is made of a material that is capable of being stretched to 120-200% of its machine direction dimension and 150-170% of its cross-machine direction dimension before breaking and has a tensile strength between 160 and 270 MPa in the machine direction and between 165 and 210 MPa in the cross machine direction,
ii) placing a first tile near a destined installation position for the first tile on the floor surface with an underside of the first tile resting on the floor surface;
iii) lifting an edge, corner, or other portion of the carpet tile;
iv) attaching the connector to the underside of the portion of the first tile, wherein adhesive on one side of the film of the connector adheres to the underside of the portion of the first tile and an exposed portion of the connector extends beyond an edge of the tile in roughly the same plane as the underside of the tile; and
v) placing a second tile near a desired installation position for the second tile on the floor surface adjacent to the first tile and on top of the exposed portion of the connector.

16. The method of claim 15, comprising the step whereby the user uses one hand to lift an edge or corner or other portion of the carpet tile and the other hand to attach the carpet tile connector adhesive side up to the edge or other part of the underside of a portion of the carpet tile such that an exposed portion of the carpet tile connector extends beyond the edge of the tile.

17. The method of claim 15 or 16, comprising the step of
i) removing the carpet tile connector from a stack of connectors, each of said carpet tile connectors in the stack bring bonded or attached together; and
ii) attaching the carpet tile connector to the underside of one carpet tile.

18. The method of claim 17, wherein the stack of connectors comprises at least a first connector and a second connector, the first connector and the second connector are adjacent to one another and oriented in a similar direction, wherein the adhesive layer of the first connector attaches to the opposite side of the second connector.

19. The method of claim 18, wherein the opposite side of the second connector comprises a release coating to prevent the adhesive from forming a permanent or hard-to-detach bond.

20. The method of any of the claims 19, wherein the adhesive layer of the first connector attaches to a release material and the opposite side of the second connector attaches to the release material.

21. The method of any of the claims 17 to 20, comprising providing the stack of carpet tile connectors in a dispenser that assists in a user in removing individual carpet tile connectors from the stack of carpet tile connectors.

## Patentansprüche

1. Ein Fußbodenbelag enthaltend modulare Teppichfliesen (41-44, 61-64), die jeweils eine Unterseite aufweisen, auf einer Bodenfläche aufliegend, ohne an der Bodenfläche befestigt zu sein, wobei die Fliesen durch Verbindungsstücke (20) für modulare Teppichfliesen miteinander verbunden sind, jeweils enthaltend:
a) einen Film;
b) eine Klebstoffschicht (24), die auf einer Seite des Films angeordnet ist;
wobei:
i) die Verbindungsstücke sich lediglich entlang eines Teils benachbarter Fliesenkanten erstrecken;
ii) die Verbindungsstücke in Verwendung in der Lage sind, eine Verbindung auszubilden, wenn sie mit den Unterseiten benachbarter Fliesen in Kontakt kommen, wobei das Haftmittel eine ausreichende Scherfestigkeit aufweist, um eine Relativbewegung zwischen den angebrachten benachbarten Fliesen zu vermeiden, und
iii) der Film (22) aus einem Material gefertigt ist, das in der Lage ist zu 120-200% in Richtung längs zur Maschinenlaufrichtung und zu 150-170% quer zur Maschinenlaufrichtung gestreckt zu werden, bevor es zum Bruch kommt, und eine Reißfestigkeit zwischen 160 und 270 MPa in Maschinenlaufrichtung und zwischen 165 und 210 MPa quer zur Maschinenlaufrichtung aufweist.

2. Der Fußbodenbelag gemäß Anspruch 1, wobei die Unterseite einer Teppichfliese einen Fliesenrücken aufweist umfassend einen aus PVC gefertigten Hartrücken oder einen Textilrücken enthaltend gewebtes Polypropylen oder einen Bitumenrücken, und wobei das Verbindungsstück in Verwendung in der Lage ist, eine Verbindung auszubilden, wenn es mit den Unterseiten benachbarter Fliesen in Kontakt tritt, in der Weise, dass in Verwendung, wenn mit den Unterseiten benachbarter Fliesen verbunden, die Verbindung zwischen der Klebstoffschicht (24) und der Fliese eine Haftungsstärke, gemessen unter Verwendung des ASTM D-3330-Testes, zwischen 0,560 kg/cm - 0,782 kg/cm (50-70 Unzen/Zoll) aufweist, wenn mit einem aus PVC gefertigten Rücken verbunden, oder eine Haftungsstärke zwischen 0,11 kg/cm - 0,67 kg/cm (10-60 Unzen/Zoll) aufweist, wenn mit einer Fliese mit Textilrücken enthaltend gewebtes Polypropylen verbunden, oder eine Haftungsstärke zwischen 0,11 kg/cm - 0,22 kg/cm (10-20 Unzen/Zoll), wenn mit einer Fliese mit Bitumenrücken verbunden, um die Ablösung und Neupositionierung der Fliese relativ zu dem Verbindungsstück zu erlauben.

3. Der Fußbodenbelag gemäß Anspruch 1 oder 2, wobei das Verbindungsstück (20) weiterhin eine Grundierungsschicht zwischen dem Film (22) und der Klebstoffschicht (24) aufweist.

4. Der Fußbodenbelag gemäß Anspruch 3, wobei die Grundierungsschicht Acryl umfasst.

5. Der Fußbodenbelag gemäß irgendeinem der vorhergehenden Ansprüche, wobei der Film (22) koronabehandelt ist.

6. Der Fußbodenbelag gemäß irgendeinem der vorhergehenden Ansprüche, wobei das Verbindungsstück (20) geeignet ist, erneut mit einer Unterseite einer Fliese (41-44, 61-64) verbunden zu werden, nachdem die Verbindung zwischen der Klebstoffschicht (24) und der Unterseite der Fliese (41-44, 61-64) aufgehoben wurde.

7. Der Fußbodenbelag gemäß irgendeinem der vorhergehenden Ansprüche, wobei der Film (22) eine Stärke zwischen 0,00127 cm (0,0005 Zoll) und 0,0381 cm (0,015 Zoll) aufweist.

8. Der Fußbodenbelag gemäß irgendeinem der vorhergehenden Ansprüche, wobei der Film (22) ein synthetisches Polymermaterial darstellt.

9. Der Fußbodenbelag gemäß Anspruch 8, wobei das synthetische Polymermaterial ausgewählt ist aus irgendeinem unter einem Polyolefin oder einem Polyamid, oder einem Polyester oder einem Polyethylenterephtalat-("PET")-Polyester.

10. Der Fußbodenbelag gemäß irgendeinem der vorhergehenden Ansprüche, wobei jedes Verbindungsstück (20) mindestens drei benachbarte Fliesen (41-44, 61-64) überbrückt.

11. Ein Fußbodenbelag gemäß Anspruch 10, wobei jedes Verbindungsstück angrenzende Ecken benachbarter Fliesen (41-44, 61-64) überbrückt.

12. Ein Fußbodenbelag gemäß Anspruch 10 oder 11, wobei die Fliesen in einer Fliesenanordnung in Form eines Mauerwerkverbandes verlegt werden.

13. Der Fußbodenbelag gemäß irgendeinem der Ansprüche 10 bis 12, wobei jede Fliese (41-44, 61-64) eine Flächenausdehnung aufweist und jedes Verbindungstück (20) eine Flächenausdehnung aufweist, wobei die Flächenausdehnung eines Verbindungsstückes 1 bis 5% der Flächenausdehnung einer Fliese ausmacht.

14. Der Fußbodenbelag gemäß irgendeinem der vorhergehenden Ansprüche, wobei die benachbarten Kanten, die von benachbarten Fliesen (41-44, 61-64) in der Fußbodenanordnung gebildet werden, eine Gesamtlänge aufweisen, und wobei die Verbindungsstücke (20) in der Fußbodenanordnung zwischen ungefähr 5 bis 10% der Gesamtlänge der benachbarten Kanten überbrücken.

15. Ein Verfahren zur Installation eines Fußbodenbelags gemäß irgendeinem der Ansprüche 1 bis 13 enthaltend die Schritte:
i) Bereitstellen eines Verbindungsstückes (20) für modulare Teppichfliesen enthaltend einen Film und eine Klebstoffschicht, die auf einer Seite des Films angeordnet ist, wobei der Film (22) aus einem Material gefertigt ist, das in der Lage ist zu 120-200% in Richtung längs zur Maschinenlaufrichtung und zu 150-170% quer zur Maschinenlaufrichtung gestreckt zu werden, bevor es zum Bruch kommt, und eine Reißfestigkeit zwischen 160 und 270 MPa in Maschinenlaufrichtung und zwischen 165 und 210 MPa quer zur Maschinenlaufrichtung aufweist,
ii) Anordnen einer ersten Fliese in der Nähe einer für die erste Fliese vorgesehenen Installationsposition auf der Bodenfläche, wobei eine Unterseite der ersten Fliese auf der Bodenfläche aufliegt.
iii) Anheben einer Kante, Ecke oder eines anderen Bereiches der Teppichfliese;
iv) Befestigen des Verbindungsstückes an der Unterseite des Bereiches der ersten Fliese, wobei das Haftmittel auf einer Seite des Films des Verbindungsstückes an der Unterseite des Bereiches der ersten Fliese haftet und ein exponierter Bereich des Verbindungsstückes über eine Kante der Fliese in ungefähr der gleichen Ebene entsprechend der Unterseite der Fliese herausragt; und
v) Anordnen einer zweiten Fliese in der Nähe einer für die zweite Fliese vorgesehenen Installationsposition auf der Bodenfläche, benachbart zur ersten Fliese und auf dem exponierten Bereich des Verbindungsstückes.

16. Das Verfahren gemäß Anspruch 15, enthaltend den Schritt wobei der Anwender eine Hand gebraucht, um eine Ecke oder Kante oder einen anderen Bereich der Fliese anzuheben, und die andere Hand, um das Verbindungsstück für Teppichfliesen mit der haftenden Seite nach oben an der Kante oder an einem anderen Teil der Unterseite eines Bereiches der Teppichfliese anzubringen, so dass ein exponierter Bereich des Verbindungsstückes für Teppichfliesen über die Kante der Fliese hinausragt.

17. Das Verfahren gemäß Anspruch 15 oder 16, enthaltend den Schritt
i) Entnehmen des Verbindungsstückes für Teppichfliesen aus einem Stapel von Verbindungsstücken, wobei jedes der Verbindungsstücke für Teppichfliesen in dem Stapel verbundene oder angebrachte zusammenbringt; und
ii) Anbringen des Verbindungsstückes für Teppichfliesen an der Unterseite einer Teppichfliese.

18. Das Verfahren gemäß Anspruch 17, wobei der Stapel von Verbindungsstücken mindestens ein erstes Verbindungsstück und ein zweites Verbindungsstück aufweist, wobei das erste Verbindungsstück und das zweite Verbindungsstück benachbart zueinander angeordnet sind und in einer ähnlichen Richtung ausgerichtet sind, wobei die Klebstoffschicht des ersten Verbindungsstückes an der gegenüberliegenden Seite des zweiten Verbindungsstückes anhaftet.

19. Das Verfahren gemäß Anspruch 18, wobei die gegenüberliegende Seite des zweiten Verbindungsstückes eine Trennbeschichtung aufweist, um zu verhindern, dass das Haftmittel eine dauerhafte oder schwer abzulösende Verbindung ausbildet.

20. Das Verfahren gemäß Anspruch 19, wobei die Klebstoffschicht des ersten Verbindungsstückes an ein Trennmaterial haftet und die gegenüberliegende Seite des zweiten Verbindungsstückes an das Trennmaterial haftet.

21. Das Verfahren gemäß irgendeinem der Anspruch 17 bis 20, enthaltend die Bereitstellung eines Stapels von Verbindungsstücken für Teppichfliesen in einer Ausgabevorrichtung, die den Anwender unterstützt einzelne Verbindungsstücke für Teppichfliesen aus dem Stapel von Verbindungsstücken für Teppichfliesen zu entnehmen.

## Revendications

1. Revêtement de sol comprenant des dalles de tapis modulaires (41-44, 61-64) ayant chacune une face inférieure sur une surface de sol sans être attachée à la surface de sol, les dalles étant connectées les unes aux autres par des connecteurs de dalles de tapis modulaires (20), comprenant chacun :
a) un film ;
b) une couche d'adhésif (24) située sur un côté du film ;
dans lequel :
i) lesdits connecteurs s'étendent le long d'une portion uniquement de bordures de dalles adjacentes ;
ii) lesdits connecteurs sont capables, en utilisation, de former une jonction collée lorsqu'ils viennent en contact avec les faces inférieures de dalles adjacentes, l'adhésif ayant une résistance au cisaillement suffisante de manière empêcher un mouvement relatif entre des dalles installées adjacentes, et
iii) ledit film (22) est fait d'un matériau qui est capable d'être étiré de 120 à 200 % dans sa dimension en direction de la machine et de 150 à 170 % dans sa dimension en direction transversale à la machine avant la rupture, et présente une résistance à la traction entre 160 et 270 MPa dans la direction de la machine et entre 165 et 210 MPa dans la direction transversale à la machine.

2. Revêtement de sol selon la revendication 1, dans lequel ladite face inférieure d'une dalle de tapis comprend un doublage comprenant un doublage dur fait de PVC ou un doublage textile comprenant un polypropylène tissé ou un doublage au bitume, et dans lequel ledit connecteur est capable, en utilisation, de former une jonction collée lorsqu'il vient en contact avec les faces inférieures de dalles adjacentes, de telle sorte qu'en utilisation, lorsqu'il est collé sur les faces inférieures de dalles adjacentes, ladite jonction collée entre la couche adhésive (24) et la dalle présente une résistance, mesurée en utilisant le test ASTM D-3330, entre 0,560 kg/cm à 0,782 kg/cm (50 à 70 onces/pouce) lorsqu'il est collé sur le doublage réalisé en PVC, ou une résistance entre 0,11 kg/cm à 0,67 kg/cm (10 à 60 onces/pouce) lorsqu'il est collé sur une dalle ayant le doublage textile comprenant du polypropylène tissé, ou une résistance entre 0,11 kg/cm à 0,22 kg/cm (10 à 20 onces/pouce) lorsqu'il est collé sur une dalle ayant le doublage en bitume, de manière à permettre un enlèvement et un repositionnement de la dalle par rapport au connecteur.

3. Revêtement de sol selon la revendication 1 ou 2, dans lequel le connecteur (20) comprend en outre un revêtement d'apprêt entre le film (22) et la couche adhésive (24).

4. Revêtement de sol selon la revendication 3, dans lequel le revêtement d'apprêt comprend une matière acrylique.

5. Revêtement de sol selon l'une quelconque des revendications précédentes, dans lequel le film (22) est traité par effet Corona.

6. Revêtement de sol selon l'une quelconque des revendications précédentes, dans lequel le connecteur (20) est capable d'assurer à nouveau une jonction collée avec une face inférieure d'une dalle (41-44, 61-64) après que la jonction collée entre la couche d'adhésif (24) et la face inférieure de la dalle (41-44, 61-64) a été rompue.

7. Revêtement de sol selon l'une quelconque des revendications précédentes, dans lequel le film (22) a une épaisseur entre 0,00127 centimètres (0,0005 pouces) et 0,0381 centimètres (0,015 pouces).

8. Revêtement de sol selon l'une quelconque des revendications précédentes, dans lequel le film (22) est en un matériau polymère synthétique.

9. Revêtement de sol selon la revendication 8, dans lequel le matériau polymère synthétique est sélectionné parmi un matériau quelconque parmi polyoléfine ou polyamide, ou polyester ou polyester au polyéthylène téréphtalate ("PET").

10. Revêtement de sol selon l'une quelconque des revendications précédentes, dans lequel chaque connecteur (20) concerne au moins trois dalles adjacentes (41-44, 61-64).

11. Revêtement de sol selon la revendication 10, dans lequel chaque connecteur concerne des coins en aboutement de dalles adjacentes (41-44, 61-64).

12. Revêtement de sol selon la revendication 10 ou 11, dans lequel les dalles sont placées dans une installation pour la pose de dalles à la manière de briques.

13. Revêtement de sol selon l'une quelconque des revendications 10 à 12, dans lequel chaque dalle (41-44, 61-64) comprend une surface, et chaque connecteur (20) comprend une surface, dans lequel la surface d'un connecteur est de 1 à 5 % de la surface d'une dalle.

14. Revêtement de sol selon l'une quelconque des revendications précédentes, dans lequel les bordures adjacentes formées par des dalles adjacentes (41-44, 61-64) dans l'installation de revêtement de sol comprennent une longueur totale, et dans lequel les connecteurs (20) dans l'installation de revêtement de sol couvrent entre approximativement 5 et 10 % de la longueur totale des bordures adjacentes.

15. Procédé pour installer un revêtement de sol tel que défini dans l'une quelconque des revendications 1 à 13, comprenant les étapes consistant à :
i) fournir un connecteur pour dalles de sol modulaires (20) comprenant un film est une couche d'adhésif situés sur un côté du film, dans lequel ledit film (22) est fait d'un matériau qui est capable d'être étiré de 120 à 200 % dans sa dimension en direction de la machine et de 150 à 170 % dans sa dimension en direction transversale à la machine avant la rupture, et présente une résistance à la traction entre 160 et 270 MPa dans la direction de la machine et entre 165 et 210 MPa dans la direction transversale à la machine,
ii) placer une première dalle à proximité d'une position d'installation de destination pour la première dalle sur la surface du sol, de sorte qu'une face inférieure de la première dalle repose sur la surface du sol ;
iii) soulever un bord, un coin, ou une autre portion de la dalle de tapis ;
iv) attacher le connecteur à la face inférieure de la portion de la première dalle, de sorte que l'adhésif sur un côté du film du connecteur adhère sur la face inférieure de la portion de la première dalle et qu'une portion exposée du connecteur s'étend au-delà d'un bord de la dalle, en gros dans le même plan que la face inférieure de la dalle ; et
v) placer une seconde dalle à proximité d'une position d'installation désirée pour la seconde dalle sur la surface du sol, adjacente à la première dalle et par-dessus la portion exposée du connecteur.

16. Procédé selon la revendication 15, comprenant l'étape dans laquelle l'utilisateur utilise une main pour soulever un bord ou un coin ou une autre portion de la dalle de tapis et l'autre main pour attacher le connecteur pour dalles de tapis avec l'adhésif tourné vers le haut sur le bord ou sur une autre partie de la face inférieure d'une portion de la dalle de tapis de telle façon qu'une portion exposée du connecteur pour dalles de tapis s'étend au-delà du bord de la dalle.

17. Procédé selon la revendication 15 ou 16, comprenant les étapes consistant à :
i) enlever le connecteur pour dalles de tapis depuis un empilement de connecteurs, chacun desdits connecteurs pour dalles de tapis dans l'empilement étant joint par collage ou attaché ensemble ; et
iii) attacher le connecteur pour dalles de tapis sur la face inférieure d'une dalle de tapis.

18. Procédé selon la revendication 17, dans lequel l'empilement de connecteurs comprend au moins un premier connecteur et un second connecteur, le premier connecteur et le second connecteur sont adjacents l'un à l'autre et orientés dans une direction similaire, dans lequel la couche adhésive du premier connecteur est attachée sur le côté opposé du second connecteur.

19. Procédé selon la revendication 18, dans lequel le côté opposé du second connecteur comprend un revêtement de détachement pour empêcher à l'adhésif de former une jonction collée permanente ou difficile à détacher.

20. Procédé selon la revendication 19, dans lequel la couche d'adhésif du premier connecteur est attachée à un matériau de détachement et le côté opposé du second connecteur est attaché au matériau de détachement.

21. Procédé selon l'une quelconque des revendications 17 à 20, comprenant la fourniture d'une pile de connecteurs pour dalles de tapis dans un distributeur qui aide un utilisateur à enlever des connecteurs pour dalles de tapis individuels depuis la pile de connecteurs pour dalles de tapis.
